(19) Europäisches Patentamt
European Patent Office
Office européen des brevets

(11) **EP 1 354 115 B1**

(12) **FASCICULE DE BREVET EUROPEEN**

(45) Date de publication et mention
de la délivrance du brevet:
**21.03.2007 Bulletin 2007/12**

(21) Numéro de dépôt: **02700384.7**

(22) Date de dépôt: **23.01.2002**

(51) Int Cl.:
*E06B 3/663* *(2006.01)*    *E06B 3/66* *(2006.01)*

(86) Numéro de dépôt international:
**PCT/FR2002/000277**

(87) Numéro de publication internationale:
**WO 2002/064937 (22.08.2002 Gazette 2002/34)**

(54) **STRUCTURE, NOTAMMENT POUR VITRAGE THERMOCHROME, COMPORTANT UNE SUBSTANCE CONTENUE ENTRE DEUX SUBSTRATS EN VERRE.**

STRUKTUR, INSBESONDERE FÜR THERMOCHROME VERGLASUNG, MIT EINER SUBSTANZ ZWISCHEN ZWEI GLASSUBSTRATEN

STRUCTURE, IN PARTICULAR FOR THERMOCHROMIC GLAZING, COMPRISING A SUBSTANCE CONTAINED BETWEEN TWO GLASS SUBSTRATES

(84) Etats contractants désignés:
**AT BE CH CY DE DK ES FI FR GB GR IE IT LI LU MC NL PT SE TR**

(30) Priorité: **24.01.2001 FR 0100912**

(43) Date de publication de la demande:
**22.10.2003 Bulletin 2003/43**

(73) Titulaire: **SAINT-GOBAIN GLASS FRANCE**
**92400 Courbevoie (FR)**

(72) Inventeurs:
• **MARTIN, Dorothée**
**F-92150 Suresnes (FR)**

• **MARANDON, Franck**
**F-75019 Paris (FR)**
• **LEHMANN, Yves**
**B-5310 Liernu (BE)**
• **BONNET, Jean-Louis**
**B-6224 Wanfercee-Baulet (BE)**
• **MESSERE, Rino**
**B-4577 Modave (BE)**

(74) Mandataire: **Aupetit, Muriel J. C.**
**Saint-Gobain Recherche**
**39, Quai Lucien Lefranc**
**93300 Aubervilliers (FR)**

(56) Documents cités:
**WO-A-00/34614** **DE-A- 4 127 130**

EP 1 354 115 B1

**Description**

L'invention concerne une structure comportant au moins deux substrats en verre écartés d'une distance i, au moins une substance, notamment une solution polymérique, remplissant au moins en partie l'espace entre les deux substrats, et des espaceurs disposés entre les deux substrats pour maintenir leur écartement. Un joint périphérique polymérique, inorganique ou métallique assure l'étanchéité et la tenue mécanique périphérique des deux substrats.

Bien qu'elle ne se limite pas à une telle application, l'invention sera plus particulièrement décrite pour la réalisation de vitrages thermochromes généralement utilisés pour des toits ou des parois de vérandas. La solution polymérique contenue dans un vitrage thermochrome est de manière connue un hydrogel qui s'opacifie au-delà d'une certaine température, coupant alors la transmission de la lumière visible et de l'infra-rouge au travers du vitrage.

L'agencement du vitrage en position verticale induit inévitablement l'écoulement par gravité de la solution vers le bas, ce qui crée une déformation dans le vitrage. Les feuilles de verre ont ainsi tendance à se rapprocher dans la partie supérieure du vitrage tandis qu'elles deviennent bombées dans sa partie inférieure engendrant des contraintes qui peuvent se traduire par un éclatement du vitrage.

Il s'avère donc préférable de maintenir constante la distance séparant les feuilles de verre d'un tel vitrage en position verticale.

La demande de brevet japonais JP 09 222 618 décrit un vitrage comportant une solution polymérique. L'écartement du vitrage en position verticale est gardé uniforme en établissant un état de pression négatif à l'intérieur du vitrage par rapport à l'extérieur, en particulier en incluant entre les deux feuilles de verre des espaceurs qui sont éparpillés aléatoirement sur la surface de la solution polymérique lors de la fabrication, sans y être fixés.

Cependant avec le temps, les espaceurs, libres dans la solution, ont tendance à descendre vers la partie inférieure du vitrage. Ils n'assurent alors plus leur fonction dans la partie supérieure du vitrage, engendrant le problème déjà évoqué de dépression hydrostatique.

L'invention a donc pour but de résoudre cet inconvénient de déformation d'une telle structure de vitrage, en particulier dans sa position verticale.

Ainsi, selon l'invention, les espaceurs sont solidarisés avec au moins l'un des substrats pour empêcher qu'ils ne tombent en position verticale de la structure.

Selon une caractéristique, les espaceurs constituent des éléments rapportés à la structure qui sont rendus solidaires par collage sur au moins l'un des substrats au moyen de colle organique ou inorganique, par exemple de l'émail.

Les espaceurs sont par exemple des billes ou autres volumes, en acier ou en un autre matériau compatible chimiquement avec la substance. De préférence, ils sont plutôt en verre pour assurer une meilleure qualité optique du vitrage. Il s'agit par exemple de billes, de cylindres ou de parallélépipèdes en verre, ou encore d'autres formes, par exemple des espaceurs en verre tels que ceux décrits dans la demande de brevet WO 99/56 302.

Il peur être utile de renforcer chimiquement les espaceurs afin d'augmenter leur résistance mécanique. Il peur également être utile de renforcer chimiquement et/ou thermiquement les feuilles de verre afin d'augmenter leur résistance mécanique.

Selon une autre caractéristique avantageuse, les espaceurs sont répartis de manière non aléatoire sur la surface de solidarisation de la structure. En effet, les inventeurs ont montré que l'optimisation du nombre et de la position des espaceurs permet de minimiser le coût de la fonction espacement dans le prix de revient de tels vitrages, tout en assurant une résistance mécanique suffisante.

On peut choisir entre une répartition homogène ou inhomogène des espaceurs. On entend par homogène que la disposition est symétrique selon au moins une des médiatrices du vitrage de forme rectangulaire.

Une répartition homogène des espaceurs est dictée par la formule $d = f \times \left[ 6 - h + \left( \dfrac{1}{h} \right) \right] \times \sqrt{\dfrac{e}{4}}$ , où d est l'écartement entre deux espaceurs selon une ligne parallèle au bord inférieur de la structure, e est l'épaisseur en mm du verre le plus fin, h la hauteur de la structure et f un coefficient de sécurité, et par le nombre total n d'espaceurs,

$$n = \left[ \dfrac{h}{d} - 1 \right] \times \left[ \dfrac{c}{d} - 1 \right]$$ , où c est la largeur de la structure.

Une répartition inhomogène des espaceurs est dictée par la formule $d' = f \times \left[ 6 - g + \left( \dfrac{1}{g} \right) \right] \times \sqrt{\dfrac{e}{4}}$ , où d' est l'écartement entre deux espaceurs d'une ligne parallèle au bord inférieur de la structure pour cette ligne précise située à une hauteur g par rapport au bord inférieur, e est l'épaisseur du verre le plus fin, g la hauteur de la ligne par rapport au bord inférieur de la structure, et f est un coefficient de sécurité, et par le nombre n' d'espaceurs pour une ligne placée à une hauteur g par rapport au bord inférieur de la structure, $n' = \dfrac{c}{d'} - 1$, où c est la largeur de la structure.

Selon une caractéristique de ces formules, la hauteur h de la structure est comprise entre 0 et 4 m. Selon une autre caractéristique, le coefficient de sécurité f est compris entre 1,3 et 2,3.

Ainsi, pour une disposition homogène, l'ensemble des espaceurs peut par exemple former deux géométries sensiblement trapézoïdales et symétriques par rapport au milieu de la structure dont les bases les plus larges sont disposées respectivement vers les extrémités supérieure et inférieure de la structure en position verticale de cette dernière.

La substance contenue entre les deux substrats peut être liquide et/ou solide, et est surtout dépourvue de tout élément gazeux. En effet, il est impératif qu'aucune phase gazeuse n'existe entre les deux substrats afin de ne pas engendrer d'écoulements ou de déformations supplémentaires à celles pouvant survenir dans le vitrage.

Enfin, l'étanchéité de la structure peut être réalisée à titre d'exemple par un joint double bien connu de l'homme du métier et composé d'un cordon de caoutchouc butyle et d'un cordon de silicone. Avantageusement, il peut être plutôt triple et comporter un joint en caoutchouc butyle et un cordon acrylique rigide, tous deux à l'intérieur de la structure, et un joint en silicone mis en contact avec l'extérieur du vitrage. Ce type de structure utilisée en tant que vitrage thermochrome peut être associée à au moins un vitrage feuilleté et/ou au moins un vitrage isolant pour constituer un vitrage qui présente ainsi une bonne stabilité mécanique.

La structure de l'invention peut être utilisée dans d'autres types de vitrage, tels qu'aussi les vitrages thermotropes, électrotropes ou encore électrochromes. D'autres caractéristiques et avantages de l'invention apparaîtront à la lecture de la description qui suit en regard des dessins annexés, sur lesquels :

- la figure 1 est une vue partielle en coupe du vitrage selon des espaceurs ;
- la figure 2 est une vue partielle en coupe du bord du vitrage ;
- les figures 3 à 5 illustrent des variantes de forme d'espaceurs;
- la figure 6 illustre une disposition homogène des espaceurs dans le vitrage;
- la figure 7 illustre schématiquement une disposition inhomogène des espaceurs dans le vitrage.

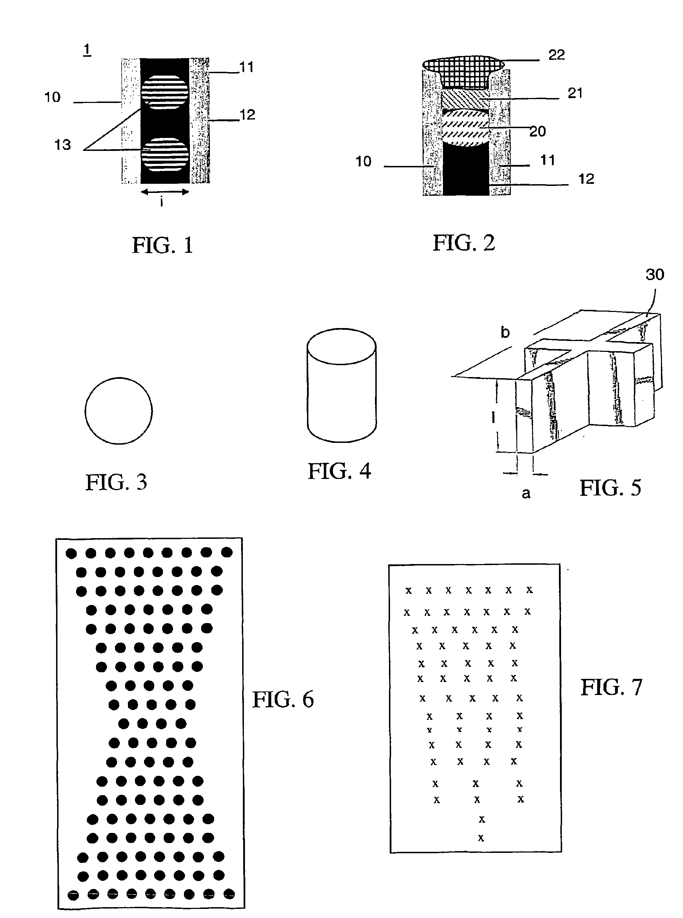

Le vitrage thermochrome 1 illustré sur la figure 1 comporte au moins deux feuilles de verre 10 et 11 écartées d'une distance i, une substance 12 telle qu'une solution polymérique remplissant l'espace de séparation des deux feuilles de verre, ainsi que des espaceurs 13 qui sont disposés entre les deux feuilles de verre et servent à maintenir constante la distance i, en position verticale du vitrage en cas de déformation des feuilles de verre.

Les dimensions d'un tel vitrage sont par exemple une hauteur de 2 m et une largeur de 80 cm, les feuilles de verre présentant une épaisseur qui peut être comprise entre 2 et 12 mm, de préférence entre 4 et 8mm.

La solution polymérique 12 est un hydrogel qui est par exemple constitué de 30 % de polyvinylcaprolactame (PVCL) et de 70 % d'eau. Elle s'opacifie au-delà d'une température de l'ordre de 25-30°C, coupant les longueurs d'onde du visible et de l'infra-rouge. La transmission lumineuse passe alors de 80% aux environs de 10-15 %.

L'épaisseur de la solution 12 qui correspond à la distance i d'écartement des feuilles de verre est comprise entre 0,1 et 3 mm, de préférence de l'ordre de 2 mm afin d'obtenir une différence suffisante d'indice $T_L$ de transmission lumineuse entre l'état non commuté et l'état commuté.

L'étanchéité et le scellage de la périphérie du vitrage tels qu'illustrés sur la figure 2 sont réalisés par un joint avantageusement triple 2 qui comporte un joint en caoutchouc butyle 20 mis en contact avec la solution 12, un cordon acrylique rigide 21 disposé autour du joint 20, et un joint en silicone 22 agencé par-dessus le cordon 21 et mis en contact avec l'extérieur du vitrage. En variante, le cordon acrylique rigide 21 et le joint caoutchouc butyle 20 peuvent être agencés de manière inverse.

Le joint butyle 20 assure l'étanchéité à la vapeur d'eau de l'intérieur du vitrage ainsi qu'aux gaz externes au vitrage pouvant se dissoudre dans la solution polymérique. Le joint butyle 20 est souple et suit les déformations du vitrage.

Enfin, le joint en silicone 22 et le cordon acrylique 21 permettent une étanchéité aux liquides ou aux solvants. Le joint 22 en silicone assure l'assemblage et le maintien mécanique des deux feuilles de verre 10 et 11.

Bien entendu, tout autre type de joint d'étanchéité connu pourrait convenir.

En position verticale du vitrage, la solution 12 descend ce qui créé un gradient de déformation entre le haut et le bas du vitrage ; les deux feuilles de verre ont tendance à se rapprocher en haut du vitrage et à s'écarter en bas du vitrage. Les espaceurs 13 permettent alors de maintenir approximativement constante la distance d'écartement i des feuilles de verre.

Conformément à l'invention, les espaceurs 13, qui sont constitués par des éléments rapportés, sont solidarisés avec au moins l'une des feuilles de verre de manière à garder leur positionnement durant toute la vie d'utilisation du vitrage.

Les espaceurs, en verre, métal ou autre matériau sont rendus solidaires avec au moins l'une des feuilles de verre par des moyens d'adhésion en fonction du type de matériau utilisé pour les espaceurs. Ces moyens d'adhésion sont par exemple une colle compatible et résistante dans le temps à la solution polymérique, ou bien un émail. Il s'agit par exemple de colles acryliques commercialisées sous la marque Loctite UV 3491, ou bien de colles sous les marques Ciba 2011, DEL 04302.

Divers types et formes d'espaceurs qui sont illustrés sur les figures 3 à 5 peuvent être envisagés. Le matériau des espaceurs doit être compatible chimiquement avec la solution polymérique 12.

Conviennent par exemple des billes en acier de 2 mm de diamètre qui doivent être convenablement calibrées à plus ou moins 10 $\mu$m au plus pour satisfaire à la résistance mécanique du vitrage.

Toutefois, des espaceurs en verre seront préférés pour la qualité optique qu'ils procurent au vitrage. Ces espaceurs en verre peuvent être des billes (figure 3), des cylindres (figure 4), ou encore présenter une forme du type cruciforme (figure 5) ou une forme telle qu'exposée dans la demande WO 99/56 302, ces formes étant notamment commercialisées sous la marque TAGLIA® par la société Saint-Gobain Display Glass.

Des essais ont été menés sur l'utilisation de billes en verre de diamètre 1 mm et de diamètre 2 mm dans un vitrage de 2 m par 0,80 m.

Pour un vitrage aux dimensions 2 m x 0,80 m sont en particulier retenues les billes en verre de diamètre 2 mm.

Concernant la variante des cylindres en verre, avec un diamètre d'au moins 1 mm, ils présentent une charge au flambage suffisante pour résister aux contraintes exercées par les feuilles de verre. Ces cylindres sont collés au substrat 10 ou 11 par une de leurs deux bases.

Quant aux espaceurs cruciformes tels qu'illustrés sur la figure 5, ils peuvent être polis ou bruts de sciage, leur charge à rupture est suffisamment élevée pour assurer parfaitement la résistance aux feuilles de verre. Les dimensions sont définies par la hauteur $l$ de 1,6 mm et la surface rectangulaire oblongue 30 (a x b) où b = 2,1 mm et a = 0,2 mm. Ces espaceurs sont collés par l'une des deux bases cruciformes comportant la surface 30.

D'autres espaceurs TAGLIA® de la demande WO 99/56 302 peuvent être dimensionnés pour atteindre une charge à rupture suffisante, elle-même imposée par le mode d'arrangement des espaceurs et de la taille du vitrage.

Le tableau ci-dessous résume les valeurs de charge à rupture qui ont été mesurées pour différentes variantes d'espaceurs en verre sollicités dans un vitrage thermochrome (2 m x 0,80 m).

| TYPE D'ESPACEUR | CHARGE A RUPTURE MAXIMALE (N) |
|---|---|
| Bille en verre (diamètre 1 mm) | 185 |
| Billes en verre (diamètre 2 mm) | 657 |
| Espaceur cruciforme poli a=0,2mm; $l$=1,6mm; b=2,1mm | 885 |
| Espaceur cruciforme brut de sciage a=0,2mm; $l$=1,6mm; b=2,1mm | 696 |

Outre leur charge à rupture élevée, les espaceurs cruciformes présentent l'avantage par rapport aux billes que leur surface d'appui est plus importante en comparaison à celle des billes, ce qui limite les risques d'indentation des feuilles de verre.

Selon l'invention, la disposition géométrique des espaceurs sur la surface rectangulaire d'un vitrage peut varier, elle peut être sensiblement rectangulaire, en trapèze ou même en cercle.

Les espaceurs sont répartis par contre de manière non aléatoire sur la surface de la feuille de verre. En effet, les inventeurs ont pu montrer qu'il peut être envisagé de réduire le nombre d'espaceurs pour un vitrage à condition de les agencer logiquement en calculant les contraintes soumises sur chaque espaceurs de chaque disposition géométrique. Il est même ainsi possible de réduire la contrainte subie par le vitrage, tout en préservant une bonne stabilité mécanique (pas de casse des verres ou des espaceurs) et en réduisant le nombre d'espaceurs et de diminuer en conséquence le prix de revient de la fonction espaceur dans le vitrage.

Par ailleurs, l'augmentation de l'épaisseur des feuilles de verre permet aussi de réduire le nombre d'espaceurs pour une même valeur de déformation des feuilles de verre tout en ne dépassant pas la contrainte de rupture des espaceurs.

Enfin, on peut préférer une disposition géométrique des espaceurs homogène ou inhomogène. On entend par homogène que la disposition est symétrique selon au moins une des médiatrices du vitrage de forme rectangulaire.

Pour une disposition homogène, la logique de répartition selon l'écartement entre les espaceurs et le nombre total d'espaceurs est fonction de la hauteur et de la largeur du vitrage. Les inventeurs ont proposé une solution de calcul :

- l'écartement d donné en cm entre deux espaceurs sur une ligne horizontale est exprimé de la manière suivante :

$$d = f \times \left[ 6 - h + \left( \frac{1}{h} \right) \right] \times \sqrt{\frac{e}{4}}$$

où e est l'épaisseur en mm du verre le plus fin, h est la hauteur en m comprise entre 0 et 4 m et f un coefficient pouvant varier entre 1,5 et 2,3. f est un coefficient multiplicateur qu'on peut appeler de sécurité, il donne une marge dans l'optimisation de l'écartement entre espaceurs et donc du nombre total d'espaceurs pour éviter la casse des espaceurs. Plus le facteur f est faible, plus on diminue la contrainte par espaceurs provoqué par la dépression hydrostatique ; et

- le nombre total n d'espaceurs est ainsi exprimé :

$$n = \left[ \frac{h}{d} - 1 \right] \times \left[ \frac{c}{d} - 1 \right]$$

où h la hauteur du vitrage, c la largeur du vitrage, et d l'écartement précédemment calculé sont en mètre. Pour le calcul, il est d'abord nécessaire de calculer chacune des deux expressions mathématiques et de les arrondir à l'entier inférieur avant de les multiplier pour donner l'entier n.

Pour une disposition inhomogène, c'est-à-dire sans aucune symétrie, la logique de répartition pour l'écartement entre espaceurs et le nombre d'espaceurs est fonction de la hauteur de la ligne par rapport au bas du vitrage sur laquelle sont positionnés les espaceurs. Les inventeurs ont proposé la solution de calcul suivant :

$$d' = f \times \left[ 6 - g + \left( \frac{1}{g} \right) \right] \times \sqrt{\frac{e}{4}}$$

où d' est l'écartement en cm entre deux espaceurs d'une ligne horizontale pour cette ligne précise située à une hauteur g par rapport au bas du vitrage qui est exprimée en m et comprise entre 0 et 4 m, e est l'épaisseur en mm du verre le plus fin, et f est le coefficient de sécurité pouvant varier entre 1,3 et 2,3 ; et

- le nombre n' d'espaceurs pour une ligne placée à une hauteur g par rapport au bas du vitrage est ainsi exprimé :

$$n' = \frac{c}{d'} - 1$$

où c est la largeur du vitrage en m, d' est l'écartement entre espaceurs calculé ci-dessus et mis en m dans l'équation, l'expression $\frac{c}{d'}$ étant arrondie à l'entier inférieur avant d'établir l'opération de soustraction.

A titre d'exemple, les valeurs données ci-après concordent avec la formule de disposition homogène. La comparaison expliquée ci-après est effectuée par rapport à deux distributions distinctes d'espaceurs identiques pour un vitrage de dimensions 2 m x 0,80 m et dont les feuilles de verre présentent une épaisseur de 4 mm.

Pour la première distribution pour laquelle le facteur de sécurité est fixé à 2,3 : le nombre total d'espaceurs n est de 144 répartis à des pas d de 10,4 cm réguliers et identiques en hauteur et en largeur selon 18 lignes avec 8 espaceurs par ligne.

Pour la seconde distribution : le nombre total est de 126 espaceurs répartis à des pas réguliers et identiques en hauteur et en largeur selon 19 lignes mais selon un gradient numéraire en fonction de la hauteur. L'agencement peut être assimilé à deux structures de forme sensiblement trapézoïdale symétriquement à la mi-hauteur du vitrage telle que visible sur la figure 6, avec un nombre d'espaceurs plus important sur les bases ou lignes supérieure et inférieure (par exemple 9) que sur la base ou ligne médiane (par exemple 4).

Les résultats comparatifs du tableau ci-dessous sont donnés sur la charge subie pour un espaceur et la contrainte subie par une face extérieure du vitrage.

| | CHARGE (N) | CONTRAINTE (MPa) |
|---|---|---|
| Première distribution homogène dite rectangulaire | 165 | 12 |
| Seconde distribution homogène dite trapézoïdale | 130 | 9 |

On voit que la disposition des espaceurs selon la logique de la seconde distribution dite trapézoïdale permet avantageusement tout en réduisant le nombre d'espaceurs, de réduire la charge subie par chaque espaceur (baisse de 20 %) et de diminuer également la contrainte que peut subir le vitrage (baisse de 25 %).

Le nombre d'espaceurs pourrait encore être diminué selon une distribution inhomogène mais logique qui tendrait à égaler à 165 N la charge par espaceur, et à 12 MPa la contrainte sur le vitrage, qui restent de toute manière des valeurs de sécurité quant à la résistance mécanique du vitrage. La figure schématique 7 illustre un exemple de disposition inhomogène pour un vitrage de même dimensions que celles du vitrage de disposition homogène pris à titre d'exemple plus haut, 2 m en hauteur et 0,80 m en largeur. 71 espaceurs sont nécessaires pour un facteur de sécurité f égal à 2,1, la distance entre les espaceurs étant différente en fonction de la hauteur de la ligne.

Cette disposition inhomogène nécessite moins d'espaceurs (71) avec une sécurité plus grande (f=2,1) que pour la disposition homogène (144 espaceurs et f=2,3). Néanmoins, contrairement à la disposition homogène pour laquelle le vitrage peut être mis verticalement dans n'importe quel sens, il est impératif de respecter pour la disposition inhomogène le sens donné au vitrage en position verticale, avec la zone concentrée en espaceurs placée vers le haut du vitrage.

Un exemple de procédé de fabrication du vitrage est le suivant.

Sur une première feuille de verre, on trace des points qui seront effacés après la fabrication du vitrage et qui correspondent, sur la face opposée de la feuille de verre aux positions des espaceurs 13 imposées selon une répartition choisie.

Sur la face destinée à accueillir les espaceurs, on vient déposer en périphérie le premier joint d'étanchéité en butyle 20. Puis après dépôt d'un point de colle sur les espaceurs, ceux-ci sont collés sur la feuille de verre aux positions sélectionnées. Une lampe à UV permet la réticulation de la colle afin de fixer totalement les espaceurs.

Le second joint d'étanchéité, à savoir le cordon acrylique 21, est déposé en périphérie de la feuille de verre et autour du premier joint 20.

La couche de la solution polymérique 12 est ensuite étalée à l'intérieur du volume délimité par le premier joint 20.

Puis, la seconde feuille de verre est appuyée sur la première feuille, quatre intercalaires, par exemple en mousse, ayant été placés entre les deux feuilles de verre pour les maintenir écartées d'une hauteur supérieure à celle des espaceurs car la solution 12 ne doit pas rentrer en contact avec la seconde feuille.

Enfin, l'ensemble des deux feuilles de verre est introduit dans une chambre où est fait le vide et est effectué le rapprochement des deux feuilles de verre tout en comprimant les intercalaires. En sortie de cette chambre, le scellage définitif des feuilles de verre et leur étanchéité finale sont réalisés par l'application du joint en silicone 22 sur la tranche du vitrage.

Dans une variante de fabrication, le joint en silicone peut être omis et le scellage peut être obtenu par la soudure des bords des feuilles de verre.

Par ailleurs, les deux premiers joints 20 et 21 appliqués dans cet exemple de réalisation du procédé avant le dépôt de la solution polymérique 12 peuvent être mis à un tout autre moment après la découpe du verre et avant le scellage du vitrage.

La structure du vitrage décrite ci-dessus a été révélée quant à son utilisation pour un vitrage thermochrome.

Bien entendu, elle s'applique à tout produit pouvant inclure entre deux substrats de verre une substance liquide ou visqueuse et pouvant comprendre des particules solides. On peut par exemple citer les collecteurs solaires, les cellules à liquides formant un écran anti-solaire, les vitrages à cristaux liquides constitués d'un gel à base de cristaux liquides, les vitrages électrochromes ou photochromes comprenant un gel ou liquide apte à s'écouler, ou les vitrages viologènes ou encore électrotropes.

**Revendications**

**1.** Structure étanche comportant au moins deux substrats en verre (10, 11) écartés d'une distance (i), au moins une substance (12) remplissant au moins en partie l'espace entre les deux substrats, et des espaceurs (13) disposés entre les deux substrats pour maintenir leur écartement, la substance (12) étant liquide et/ou solide, et dépourvue de tout élément gazeux **caractérisée en ce que** les espaceurs (13) sont solidarisés avec au moins l'un des substrats.

2. Structure selon la revendication 1, **caractérisée en ce que** la substance (12) consiste en une solution polymérique.

3. Structure selon l'une quelconque des revendications précédentes, **caractérisée en ce que** les espaceurs (13) constituent des éléments rapportés au vitrage qui sont rendus solidaires par collage.

4. Structure selon la revendication 3, **caractérisée en ce que** le collage est réalisé par de la colle ou un émail.

5. Structure selon l'une quelconque des revendications précédentes, **caractérisée en ce que** les espaceurs (13) sont des billes d'acier.

6. Structure selon l'une des revendications 1 à 5, **caractérisée en ce que** les espaceurs (13) sont en verre.

7. Structure selon la revendication 6, **caractérisée en ce que** les espaceurs (13) sont en forme de bille ou de cylindre.

8. Structure selon la revendication 6, **caractérisée en ce que** les espaceurs (13) sont de forme cruciforme.

9. Structure selon l'une quelconque des revendications précédentes, **caractérisée en ce que** les espaceurs (13) sont répartis de manière non aléatoire sur la surface de solidarisation de la structure.

10. Structure selon la revendication 9. de forme sensiblement parallélépipédique, **caractérisée en ce qu'**une répartition homogène des espaceurs est dictée par la formule $d = f \times \left[ 6 - h + \left( \dfrac{1}{h} \right) \right] \times \sqrt{\dfrac{e}{4}}$ , où d est l'écartement entre deux espaceurs selon une ligne parallèle au bord inférieur de la structure, e est l'épaisseur en mm du verre le plus fin, h la hauteur de la structure et f un coefficient de sécurité, et par le nombre total n d'espaceurs, $n = \left[ \dfrac{h}{d} - 1 \right] \times \left[ \dfrac{c}{d} - 1 \right]$ , où c est la largeur de la structure.

11. Structure selon la revendication 9, de forme sensiblement parallélépipédique, **caractérisée en ce qu'**une répartition inhomogène des espaceurs est dictée par la formule $d' = f \times \left[ 6 - g + \left( \dfrac{1}{g} \right) \right] \times \sqrt{\dfrac{e}{4}}$ , où d' est l'écartement entre deux espaceurs d'une ligne parallèle au bord inférieur de la structure pour cette ligne précise située à une hauteur g par rapport au bord inférieur, e est l'épaisseur du verre le plus fin, g la hauteur de la ligne par rapport au bord inférieur de la structure, et f est un coefficient de sécurité, et par le nombre n' d'espaceurs pour une ligne placée à une hauteur g par rapport au bord inférieur de la structure, $n' = \dfrac{c}{d'} - 1$ , où c est la largeur de la structure.

12. Structure selon la revendication 10 ou 11, **caractérisée en ce que** la hauteur h de la structure est comprise entre 0 et 4 m.

13. Structure selon la revendication 12, **caractérisée en ce que** le coefficient de sécurité f est compris entre 1,3 et 2,3.

14. Structure selon la revendication 10, **caractérisée en ce que** l'ensemble des espaceurs forme deux géométries sensiblement trapézoïdales et symétriques par rapport au milieu de la structure dont les bases les plus larges sont disposées respectivement vers les extrémités supérieure et inférieure de la structure en position verticale de cette dernière.

15. Structure selon l'une quelconque des revendications précédentes, **caractérisée en ce que** l'étanchéité de la structure est réalisée par un joint triple (2) qui comporte à l'intérieur de la structure un joint en caoutchouc butyle (20) et un cordon acrylique rigide (21), et mis en contact avec l'extérieur du vitrage, un joint en silicone (22).

16. Utilisation d'une structure selon l'une quelconque des revendications précédentes pour un vitrage thermochrome.

**17.** Vitrage comportant au moins un vitrage thermochrome de structure selon la revendication 1 et au moins un vitrage feuilleté et/ou au moins un vitrage isolant.

**Claims**

**1.** A tight structure comprising at least two glass substrates (10, 11) separated by a distance (i), at least one substance (12) at least partly filling the space between the two substrates, and spacers (13) placed between the two substrates in order to maintain their separation, the substance (12) being liquid and/or solid, and containing no gaseous element **characterized in that** the spacers (13) are fastened to at least one of the substrates.

**2.** The structure as claimed in claim 1, **characterized in that** the substance (12) consists of a polymeric solution.

**3.** The structure as claimed in either of the preceding claims, **characterized in that** the spacers (13) constitute elements attached to the glazing, which are fastened by adhesive bonding.

**4.** The structure as claimed in claim 3, **characterized in that** the adhesive bonding is achieved by an adhesive or an enamel.

**5.** The structure as claimed in any one of the preceding claims, **characterized in that** the spacers (13) are steel balls.

**6.** The structure as claimed in one of claims 1 to 5, **characterized in that** the spacers (13) are made of glass.

**7.** The structure as claimed in claim 6, **characterized in that** the spacers (13) are in the form of balls or cylinders.

**8.** The structure as claimed in claim 6, **characterized in that** the spacers (13) are cruciform.

**9.** The structure as claimed in any one of the preceding claims, **characterized in that** the spacers (13) are distributed nonrandomly over the fastening surface of the structure.

**10.** The structure as claimed in claim 9, having a substantially parallelepipedal shape, **characterized in that** a homogeneous distribution of the spacers is given by the formula $d = f \times \left[ 6 - h + \left( \dfrac{1}{h} \right) \right] \times \sqrt{\dfrac{e}{4}}$, where d is the distance between two spacers along a row parallel to the lower edge of the structure, e is the thickness in mm of the thinnest glass, h is the height of the structure and f is a safety factor, and by the total number n of spacers, given by $n = \left[ \dfrac{h}{d} - 1 \right] \times \left[ \dfrac{c}{d} - 1 \right]$, where c is the width of the structure.

**11.** The structure as claimed in claim 9, having an approximately parallelepipedal shape, **characterized in that** an inhomogeneous distribution of the spacers is given by the formula

$$d' = f \times \left[ 6 - g + \left( \frac{1}{g} \right) \right] \times \sqrt{\frac{e}{4}},$$

where d' is the distance between two spacers along a row parallel to the lower edge of the structure, for this specific row located at a height g with respect to the lower edge, e is the thickness of the thinnest glass, g is the height of the row with respect to the lower edge of the structure and f is a safety factor, and by the number n' of spacers for a row placed at a height g with respect to the lower edge of the structure, given by $n' = \dfrac{c}{d'} - 1$, where c is the width of the structure.

**12.** The structure as claimed in claim 10 or 11, **characterized in that** the height h of the structure is between 0 and 4 m.

**13.** The structure as claimed in claim 12, **characterized in that** the safety factor f is between 1.3 and 2.3.

**14.** The structure as claimed in claim 10, **characterized in that** the spacers together form two approximately trapezoidal geometries symmetrical with respect to the middle of the structure, the larger bases of which lie respectively toward the upper and lower ends of the structure when the latter is positioned vertically.

**15.** The structure as claimed in any one of the preceding claims, **characterized in that** the structure is sealed by a triple seal (2) which comprises, on the inside of the structure, a butyl rubber seal (20) and a rigid acrylic bead (21) and, brought into contact with the outside of the glazing, a silicone seal (22).

**16.** The use of a structure as claimed in any one of the preceding claims for thermochromic glazing.

**17.** A glazing comprising at least one thermochromic pane having a structure as claimed in claim 1 and at least one laminated glass pane and/or at least one insulating glass pane.

**Patentansprüche**

**1.** Dichter Aufbau, der mindestens zwei Glassubstrate (10, 11), die mit einem Abstand (i) voneinander entfernt sind, mindestens eine Substanz (12), die den Zwischenraum zwischen den zwei Substraten wenigstens teilweise ausfüllt, und Abstandshalter (13), die zwischen den zwei Substraten angeordnet sind, um deren Abstand aufrechtzuerhalten, umfasst, wobei die Substanz (12) flüssig und/oder fest und frei von einem gasförmigen Bestandteil ist, **dadurch gekennzeichnet, dass** die Abstandshalter (13) mit mindestens einem der Substrate fest verbunden sind.

**2.** Aufbau nach Anspruch 1, **dadurch gekennzeichnet, dass** die Substanz (12) aus einer Polymerlösung besteht.

**3.** Aufbau nach einem der vorhergehenden Ansprüche, **dadurch gekennzeichnet, dass** die Abstandshalter (13) mit der Verglasung verbundene Elemente bilden, die durch eine Klebverbindung befestigt worden sind.

**4.** Aufbau nach Anspruch 3, **dadurch gekennzeichnet, dass** die Klebverbindung mit einem Klebstoff oder einem Email realisiert wird.

**5.** Aufbau nach einem der vorhergehenden Ansprüche, **dadurch gekennzeichnet, dass** die Abstandshalter (13) Stahlkugeln sind.

**6.** Aufbau nach einem der Ansprüche 1 bis 5, **dadurch gekennzeichnet, dass** die Abstandshalter (13) aus Glas bestehen.

**7.** Aufbau nach Anspruch 6, **dadurch gekennzeichnet, dass** die Abstandshalter (13) die Form einer Kugel oder eines Zylinders haben.

**8.** Aufbau nach Anspruch 6, **dadurch gekennzeichnet, dass** die Abstandshalter (13) kreuzförmig sind.

**9.** Aufbau nach einem der vorhergehenden Ansprüche, **dadurch gekennzeichnet, dass** die Abstandshalter (13) nicht zufällig auf der Befestigungsfläche mit dem Aufbau verteilt sind.

**10.** Aufbau nach Anspruch 9 mit im Wesentlichen parallelepipedischer Form, **dadurch gekennzeichnet, dass** eine homogene Verteilung der Abstandshalter von der Formel

$$d = f \; x \left[ 6 - h + \left( \frac{1}{h} \right) \right] x \sqrt{\frac{e}{4}} \; ,$$

wobei d den Abstand zwischen zwei Abstandshaltern in einer zum unteren Rand des Aufbaus parallelen Linie, e die Dicke in mm des dünnsten Glases, h die Höhe des Aufbaus und f einen Sicherheitskoeffizienten bedeutet, und von der Gesamtzahl n der Abstandshalter

$$n = \left[\frac{h}{d} - 1\right] x \left[\frac{c}{d} - 1\right] ,$$

wobei c die Breite des Aufbaus bedeutet, bestimmt wird.

**11.** Aufbau nach Anspruch 9 mit im Wesentlichen parallelepipedischer Form, **dadurch gekennzeichnet, dass** eine homogene Verteilung der Abstandshalter von der Formel

$$d' = f \, x \left[6 - g + \left(\frac{1}{g}\right)\right] x \sqrt{\frac{e}{4}} ,$$

wobei d' den Abstand zwischen zwei Abstandshaltern auf einer zum unteren Rand des Aufbaus parallelen Linie für diese genaue Linie, die sich auf einer Höhe g in Bezug auf den unteren Rand befindet, e die Dicke des dünnsten Glases, g die Höhe der Linie in Bezug auf den unteren Rand des Aufbaus und f einen Sicherheitskoeffizienten bedeutet, und von der Anzahl n' der Abstandshalter für eine Linie, die auf einer Höhe g in Bezug auf den unteren Rand des Aufbaus angeordnet ist,

$$n' = \frac{c}{d'} - 1 ,$$

wobei c die Breite des Aufbaus bedeutet, bestimmt wird.

**12.** Aufbau nach Anspruch 10 oder 11, **dadurch gekennzeichnet, dass** die Höhe h des Aufbaus zwischen 0 und 4 m beträgt.

**13.** Aufbau nach Anspruch 12, **dadurch gekennzeichnet, dass** der Sicherheitskoeffizient f 1,3 bis 2,3 beträgt.

**14.** Aufbau nach Anspruch 10, **dadurch gekennzeichnet, dass** die Gesamtheit der Abstandshalter zwei Geometrien bildet, die im Wesentlichen trapezförmig und in Bezug auf die Mitte des Aufbaus symmetrisch sind und deren größte Grundlinien zu dem oberen Ende bzw. dem unteren Ende des Aufbaus in deren senkrechten Position angeordnet sind.

**15.** Aufbau nach einem der vorhergehenden Ansprüche, **dadurch gekennzeichnet, dass** die Dichtheit des Aufbaus durch eine Dreifachdichtung (2) hergestellt wird, die im Inneren des Aufbaus eine Butylkautschukdichtung (20) und eine steife Acrylraupe (21) und, mit der Außenseite der Verglasung im Kontakt, eine Silikondichtung (22) umfasst.

**16.** Verwendung eines Aufbaus nach einem der vorhergehenden Ansprüche für ein thermochromes Mehrscheibenglas.

**17.** Verglasung, die mindestens ein thermochromes Mehrscheibenglas mit dem Aufbau nach Anspruch 1 und mindestens eine Verbundglasscheibe und/oder mindestens ein Isolierglas umfasst.

FIG. 1

FIG. 2

FIG. 3

FIG. 4

FIG. 5

FIG. 6

FIG. 7